# EUROPÄISCHE PATENTSCHRIFT

(11) **EP 3 770 565 B1**
(45) Veröffentlichungstag und Bekanntmachung des Hinweises auf die Patenterteilung: **19.04.2023**
(21) Anmeldenummer: 19176289.7
(22) Anmeldetag: 23.05.2019
(51) Int. Cl.: G01G 19/02, B66F 7/28

(54) **TRAGTELLER FÜR EINE FAHRZEUGHEBEBÜHNE**
CARRIER PLATE FOR A VEHICLE RAISING PLATFORM
PLATEAU PORTEUR POUR UN PONT ÉLÉVATEUR POUR VÉHICULES

(43) Veröffentlichungstag der Anmeldung: 27.01.2021
(73) Patentinhaber: Nussbaum Automotive Lifts GmbH, 77694 Kehl (DE)
(72) Erfinder: Nussbaum, Steffen, 67000 Strassburg (FR)
(74) Vertreter: LBP Lemcke, Brommer & Partner Patentanwälte mbB

(56) Entgegenhaltungen:
- EP-A1- 2 754 636
- WO-A1-2011/054335
- DE-U1- 9 312 286
- US-A- 2 786 669

## Beschreibung

Die vorliegende Erfindung betrifft einen Tragteller für eine Fahrzeughebebühne mit einer tellerförmigen Tragstruktur zur Aufnahme eines anzuhebenden Fahrzeugs an einem fahrzeugseitigen Aufnahmepunkt, mit einem an der Unterseite der Tragstruktur angeordneten Befestigungselement zur lösbaren Befestigung des Tragtellers an einem Tragarm der Fahrzeughebebühne und mit einer Sensoranordnung zum Erfassen einer auf den Tragteller wirkenden Gewichtskraft.

Hebebühnen mit Tragarmen sind weit verbreitet, da durch die variablen Tragarme sowohl große als auch kleine Fahrzeuge aufgenommen und angehoben werden können. Die Fahrzeuge werden hierbei auf sogenannten Tragtellern aufgenommen, die an den freien Enden der Tragarme angeordnet sind. Diese Tragteller müssen durch Einschwenken und Längenverstellung der Tragarme unter die vom Fahrzeughersteller vorgeschriebenen Aufnahmepunkte des Fahrzeugs positioniert werden, um ein sicheres Anheben zu gewährleisten. Eine häufige Ursache für Fahrzeugabstürze von Hebebühnen ist die nicht ordnungsgemäße Aufnahme bzw. nicht ordnungsgemäße Positionierung der Tragteller unter dem Fahrzeug.

Um eine nicht ordnungsgemäße Aufnahme eines Fahrzeugs frühzeitig zu erkennen, sind verschiedene Maßnahmen vorgeschlagen worden. So beschreibt die EP 2 708 489 A1, dass in den Tragarmen Dehnmessstreifen vorgesehen sein können, welche zur Bestimmung einer auf den Tragarm einwirkenden Gewichtskraft dienen. Die Sensoren sind mit einem Computer verbunden, der eine Prüfung der Gesamtlast und der Lastverteilung vornimmt. Sind die ermittelten Gewichtskräfte pro Tragarm oder insgesamt zu hoch oder liegt eine zu ungleiche Lastverteilung vor, so kann der Computer einen Hubvorgang unterbinden.

Daneben wurde auch vorgeschlagen, Sensoren statt an den Tragarmen direkt in den Tragtellern vorzusehen. So beschreibt die DE 10 2009 051 702 B3 einen Tragteller mit integrierter Gewichtsmessvorrichtung in Form eines fluidgefüllten Hohlraumes und eines an diesen angeschlossenen Druckmessgerätes. Die auf den Tragteller wirkende Gewichtskraft führt zu einer Druckerhöhung. Diese kann an einer am Umfangrand des Tragtellers befindlichen Anzeige angezeigt werden. Eine derartige Messvorrichtung ist jedoch empfindlich und eignet sich nur beding für den rauen Einsatz in Kfz-Werkstätten.

Die DE 10 2007 053 757 B3 zeigt einen Tragteller, der auf einer Flüssigkeitsgefüllten Kammer ruht, deren Fluiddruck zur Ermittlung einer auflastenden Gewichtskraft gemessen wird.

Die Schrift EP 1876136 A1 beschreibt einen Tragteller mit in deren Halterung integriertem Sensor zur Gewichtskraftmessung. Als Sensorelement werden Dehnmessstreifen vorgeschlagen. Ein Dehnmessstreifen zur Messung einer Materialverformung an der Halterung eines Tragtellers ermöglicht jedoch keine besonders genaue Messung einer auflagernden Gewichtskraft. Zudem besteht auch hierbei durch die auftretenden mechanischen Belastungen die Gefahr einer Beschädigung des Sensors.

Schließlich beschreibt die EP 2754636 B1 eine Hebebühne mit Tragarmen, deren Tragteller im Inneren eine sternförmige Tragstruktur aufweisen, an der mittels vier Dehnmessstreifen eine Verformung der Tragstruktur durch darauf auflastende Gewichtskräfte gemessen werden kann.

Aus WO 2011/054335 A1 ist ein Tragteller mit einem integrierten, hydraulischen Druckmessgerät bekannt.

Eine Aufgabe der vorliegenden Erfindung besteht darin, einen Tragteller mit einer Sensoranordnung zum Erfassen einer auf den Tragteller wirkenden Gewichtskraft anzugeben, der robust und störunanfällig, technisch einfach aufgebaut und wenig wartungsaufwendig ist und der eine genaue Erfassung auf den Tragteller wirkender Gewichtskräfte, vorzugsweise eine Druckkraftverteilung über eine Anlagefläche des Tragtellers ermöglicht.

Die Aufgabe wird gelöst durch einen Tragteller mit den Merkmalen des Anspruchs 1. Vorteilhafte Ausgestaltungen sind den abhängigen Ansprüchen zu entnehmen.

Bei einem Tragteller der eingangs genannten Art ist erfindungsgemäß vorgesehen, dass der Tragteller eine elastische Auflage umfasst und die Sensoranordnung ausgebildet ist, eine Verformung der elastischen Auflage unter Krafteinwirkung zu detektieren. Die elastische Auflage ist zumindest teilweise zwischen einem metallischen Element, insbesondere einem scheibenförmigen Element und der Tragstruktur angeordnet. Die Sensoranordnung ist ausgebildet, eine Abstandsänderung zwischen dem Element und der Tragstruktur unter Krafteinwirkung zu detektieren.

Die meisten bekannten Messverfahren zur Kräftemessung basieren im Wesentlichen auf einer Verformung eines Werkstoffes, die messtechnisch erfasst wird. Ein Grundgedanke der vorliegenden Erfindung besteht darin, die Verformung einer gummielastischen Auflage des Tragtellers, deren Hauptfunktion darin besteht, die Haftreibung zwischen Auflagerpunkt und Tragteller zu erhöhen und eine Beschädigung eines anzuhebenden Fahrzeugs an den Auflagerpunkten durch den Tragteller zu vermeiden, messtechnisch zu erfassen. Somit kann auf zusätzliche Verformungselemente wie etwa Federn, Dehnmessstreifen oder piezokeramische Elemente verzichtet werden. Als Sensoranordnung zur Detektion einer Verformung der elastischen Auflage unter Krafteinwirkung eignen sich insbesondere induktive oder kapazitive Messverfahren. Die Sensoranordnung umfasst somit mindestens einen induktiven oder kapazitiven Sensor. Derartige Sensoranordnungen können äußerst robust ausgeführt werden.

Ein weiterer Vorteil der vorliegenden Erfindung besteht darin, dass die erfindungsgemäßen Tragteller an vorhandenen Hebebühnen durch Austausch gegen die herkömmlichen Tragteller nachgerüstet werden können, ohne dass hierbei weiterer Installationsaufwand an den Hebebühnen erforderlich wäre.

Die Detektion der Abstandsänderung kann insbesondere induktiv oder kapazitiv erfolgen. Das metallische Element dient hierbei als Bezugspunkt für eine induktive oder kapazitive Abstandmessung. Gleichzeitig sorgt ein solches metallisches Element für eine flächige Druckverteilung der Auflast auf den Tragteller. Das zwischen der Tragstruktur des Tragtellers und dem metallischen Element befindliche Material der elastischen Auflage wird abhängig von einer auflastenden Kraft verformt.

Zur Messung wird somit die Abstandsänderung zwischen Tragstruktur des Tragtellers und dem metallischen Element unter Krafteinwirkung, d.h. die Dickeänderung der dazwischen befindlichen elastischen Auflage gemessen. Hierbei kann insbesondere vorgesehen sein, dass das metallische Element in die elastische Auflage eingebettet ist. Alternativ ist es jedoch auch möglich, dass sich das metallische Element oberhalb der elastischen Auflage befindet, diese also vollständig zwischen metallischem Element und Tragteller angeordnet ist. In letztgenanntem Fall können zusätzlich oberhalb des metallischen Elements eine rutschmindernde Beschichtung angebracht sein, beispielsweise eine weitere Elastomerschicht, welche in Anlage zu dem anzuhebenden Fahrzeug gelangt.

Die Sensoranordnung kann vorzugsweise zwischen der elastischen Auflage und der Tragstruktur angeordnet werden. Hierdurch ist die Sensoranordnung vor äußeren Einflüssen geschützt und es ergibt sich somit ein besonders robuster Aufbau.

In einer bevorzugten Ausführungsform erfolgt die Abstandmessung zwischen metallischem Element und Tragstruktur induktiv. Hierzu umfasst die Sensoranordnung mindestens eine Spule. Außerdem ist eine Messanordnung vorgesehen, die zur Messung einer Änderung der Induktivität der Spule aufgrund einer Abstandsänderung zwischen der Spule und dem metallischen Element ausgebildet ist. Besonders vorteilhaft ist es hierbei, wenn die mindestens eine Spule auf eine zwischen elastischer Auflage und Tragstruktur angeordneten Leiterplatte aufgedruckt ist. Eine derartige gedruckte Spule ist äußerst robust. Unter Verwendung herkömmlichen Leiterplattenmaterials aus beispielsweise Epoxidharz und Glasfasergewebe kann bei der üblichen Größe der Auflagefläche eines Tragtellers die Auflagekraft problemlos über die Leiterplatte übertragen werden.

Bei einer bevorzugten Weiterbildung der vorliegenden Erfindung umfasst die Sensoranordnung mehrere in Umfangsrichtung versetzt angeordnete Spulen, insbesondere auf die zwischen elastischer Auflage und Tragstruktur angeordnete Leiterplatte aufgedruckte Spulen, und die Messanordnung ist zur Ermittlung einer Kraftverteilung über die Auflage des Tragtellers ausgebildet. Die Verwendung mehrerer, versetzt angeordneter Spulen ermöglicht somit auf einfache Weise die Messung einer Kraftverteilung über den Tragteller. Hierdurch kann erkannt werden, ob ein anzuhebendes Fahrzeug richtig aufgenommen wurde, oder ob eventuell ein Risiko besteht, dass das Fahrzeug bei außermittiger Aufnahme auf dem Tragteller von diesem abrutschen könnte. Insbesondere kann hierbei eine Visualisierung der Kraftverteilung über die Anlagefläche des Tragtellers auf einer an der Unterseite des Tragtellers angebrachten optischen Anzeige, biespielsweise den einzelnen Spulen zugeordneten LEDs, erfolgen. Ein Bediener kann somit sofort erkennen, ob ein Fahrzeug ordnungsgemäß aufgenommen ist, oder ob der Tragteller außermittig belastet wird.

Zur Messung einer Kraftverteilung über den Tragteller ist es insbesondere vorteilhaft, wenn die elastische Auflage durch radial verlaufende Vertiefungen in gleichartige Sektoren unterteilt ist und jedem Sektor eine der Spulen zugeordnet ist. Die Unterteilung der elastischen Auflage in Sektoren ermöglich eine präzise Messung der Druckkraftverteilung über die einzelnen Sektoren.

Bei einem erfindungsgemäßen Tragteller kann insbesondere vorgesehen sein, dass die Sensoranordnung auf einer ersten, zwischen Auflage und Tragstruktur angeordneten Leiterplatte untergebracht ist und dass eine Auswerteeinheit zur Ansteuerung der Sensoranordnung und/oder Auswertung von der Sensoranordnung gelieferter Messsignale auf einer zweiten, an einer Unterseite der Tragstruktur angeordneten Leiterplatte untergebracht ist. Die Leiterplatte mit der Sensoranordnung liegt somit geschützt unter der elastischen Auflage im Kraftweg, während die übrigen Komponenten der Auswerteeinheit vor Krafteinwirkung geschützt an der Unterseite des Tragtellers untergebracht sind. Insbesondere kann hierbei vorgesehen sein, dass die erste und die zweite Leiterplatte über eine durch einen Durchbruch in der Tragstruktur geführte Steckverbindung signaltechnisch verbunden sind. Hierdurch wird eine einfache Montage bei zuverlässiger elektrischer Kontaktierung der Leiterplatten ermöglicht.

Bei einer weiteren bevorzugten Ausführungsform werden die Sensoranordnung und zugehörige Auswerteeinheit von einer batteriebetriebenen Stromquelle versorgt. Somit kann auf eine kabelgebundene Stromzufuhr verzichtet werden und der Tragteller ist autark betriebsfähig. Hierbei ist es insbesondere vorteilhaft, wenn die Auswerteeinheit einen stromsparenden Standby-Betriebsmodus aufweist, in welchen die Auswerteeinheit bei Inaktivität über einen vorgegebenen Standby-Zeitraum umschaltet. Mithilfe eines solchen Stromsparmodus verlängert sich die Betriebsdauer des Tragtellers bis zu einem Batterieaustausch oder Aufladen im Falle wiederaufladbarer Batterien erheblich. Hierbei ist es insbesondere vorteilhaft, wenn mindestens ein Beschleunigungssenor zum Erfassen einer Beschleunigung des Tragtellers vorgesehen wird, der mit der Auswerteeinheit signaltechnisch verbunden ist, um diese bei Auftreten einer Beschleunigung aus dem Standby-Betriebsmodus aufzuwecken. Somit erfolgt eine automatische Aktivierung des Tragtellers, wenn dieser zum Anheben eines Fahrzeugs unter einen Auflagerpunkt desselben verschwenkt wird.

Des Weiteren kann der Tragteller mit einer Sendeeinheit zur drahtlosen Übertragung von der Sensoranordnung gemessener oder davon abgeleiteter Signale an eine Zentraleinheit ausgestattet sein. Dort können die Messsignale weiterverarbeitet und/oder gespeichert werden. Hierdurch ist es möglich, im Falle eines Fehlers oder Unfalls im Nachhinein die Aufnahmesituation eines Fahrzeugs nachzuvollziehen. Eine Drahtlosschnittstelle ermöglicht eine besonders einfache Handhabung, da auf eine aufwendige Verkabelung verzichtet werden kann.

Im Rahmen der vorliegenden Erfindung ist außerdem eine Hebebühne für Fahrzeuge vorgesehen mit mittels eines Hubmechanismus höhenverstellbaren Tragarmen zum Anheben des Fahrzeugs und mit an einem freien Ende der Tragarme angeordneten Tragtellern zur Aufnahme des anzuhebenden Fahrzeuges. Hierbei kommen erfindungsgemäß Tragteller der vorgenannten Art zum Einsatz, welche eine elastische Auflage umfassen sowie eine Sensoranordnung, die ausgebildet ist, eine Verformung der elastischen Auflage unter Krafteinwirkung zu detektieren.

Weitere Vorteile und Eigenschaften der vorliegenden Erfindung ergeben sich aus der nachfolgenden Beschreibung von Ausführungsbeispielen anhand der Figuren. Es zeigt:
- Figur 1: Eine Zwei-Säulen-Hebebühne mit vier Tragarmen, an deren freien Enden jeweils ein Tragteller angeordnet ist,
- Figur 2: einen Schnitt durch einen Tragteller,
- Figur 3: einen Schnitt durch eine Elastomerauflage für den Tragteller aus Figur 2,
- Figur 4: eine isometrische Ansicht der Elastomerauflage aus Figur 3 und
- Figur 5: ein Blockschaltbild einer bei dem Tragteller aus Figur 2 verbauten Sensoreinrichtung sowie induktiven Drucksensoren und zugehöriger Steuer- bzw. Auswerteschaltung.

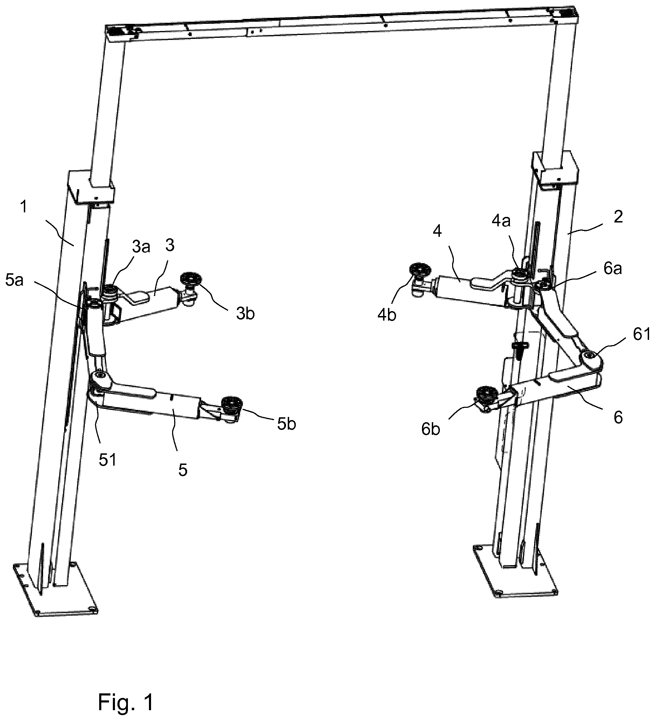

In Figur 1 ist eine Hebebühne mit zwei Hubsäulen 1, 2 dargestellt, an denen jeweils zwei Tragarme 3, 5 bzw. 4, 6 schwenkbar angelenkt sind. Die Tragarme 3, 4, 5, 6 sind höhenverstellbar, das heißt sie können angehoben und abgesenkt werden. Der Hubantrieb innerhalb der Hubsäule 1, 2 erfolgt in an sich bekannter Weise, beispielsweise mittels Zylinderkolbenaggregaten, mittels einer Gewindespindel oder mittels eines Kettenantriebs. Die vorliegende Erfindung ist nicht auf zwei Säulenhebebühnen beschränkt, sondern kann bei allen Arten von Hebebühnen mit oder ohne Tragarmen zum Einsatz kommen, wie etwa 4-SäulenHebebühnen, Stempelhebebühnen oder Scherenhebebühnen.

Die Tragarme 3, 4 bilden ein vorderes Tragarmpaar, das heißt dienen zum Anheben der vorderen Fahrzeughälfte, und die Tragarme 5, 6 bilden ein Tragarmpaar für die hintere Fahrzeughälfte. Die Tragarme 3 und 5 der linken Fahrzeugseite sind spiegelbildlich zu den Tragarmen 4, 6 der rechten Fahrzeugseite angeordnet. Die Tragarme sind jeweils über ein Schwenklager 3a, 4a, 5a, 6a schwenkbar an ihrer zugehörigen Hubsäule 1, 2 gelagert, sodass sie unter ein zwischen den Hubsäulen 1, 2 abgestelltes Fahrzeug untergeschwenkt und zu den Aufnahmepunkten am Fahrzeugboden bewegt werden können.

An den freien Enden der Tragarme 3, 4, 5, 6 sind Tragteller 3b, 4b, 5b, 6b angeordnet, die beim Anheben der Tragarme in Anlage mit dem Fahrzeug kommen. Über ein Gewinde können die Tragteller 3b, 4b, 5b, 6b gegenüber den zugehörigen Tragarmen 3, 4, 5, 6 auch im gewissen Umfang in der Höhe verstellbar sein.

An einer Quertraverse 7 zwischen den Hubsäulen 1, 2 kann zusätzlich eine Kamera 8 angebracht sein, welche dazu dient, die Position eines abgestellten Fahrzeugs zwischen den Hubsäulen 1, 2 zu ermitteln.

Im Ausführungsbeispiel sind die Tragarme des hinteren Tragarmpaars, ohne dass die Erfindung hierauf beschränkt wäre, als Doppelgelenkarme ausgebildet, während die Tragarme 3, 4 des vorderen Tragarmpaars als herkömmliche, starre Tragarme ausgeführt sind. Die vorderen Tragarme 3, 4 sind somit lediglich um ihren jeweiligen Anlenkpunkt 3a, 4a an den Hubsäulen 1, 2 verschwenkbar und können außerdem teleskopisch in der Länge verstellt werden (2-fach teleskopisch längenverstellbar). Die hinteren beiden Tragarme 5, 6 sind mit einem zusätzlichen Knickgelenk 51, 61 versehen, sodass der jeweilige Tragarm 5, 6 in seiner durch das Schwenkgelenk 5a, 6a definierten Schwenkebene abgewinkelt werden kann. Außerdem sind die hinteren Tragarme 5, 6 ebenfalls teleskopisch längenverstellbar. Diese Anordnung ermöglicht eine sehr variable Aufnahme von Fahrzeugen und insbesondere die Aufnahme von Fahrzeugen unterschiedlicher Fahrzeuglänge.

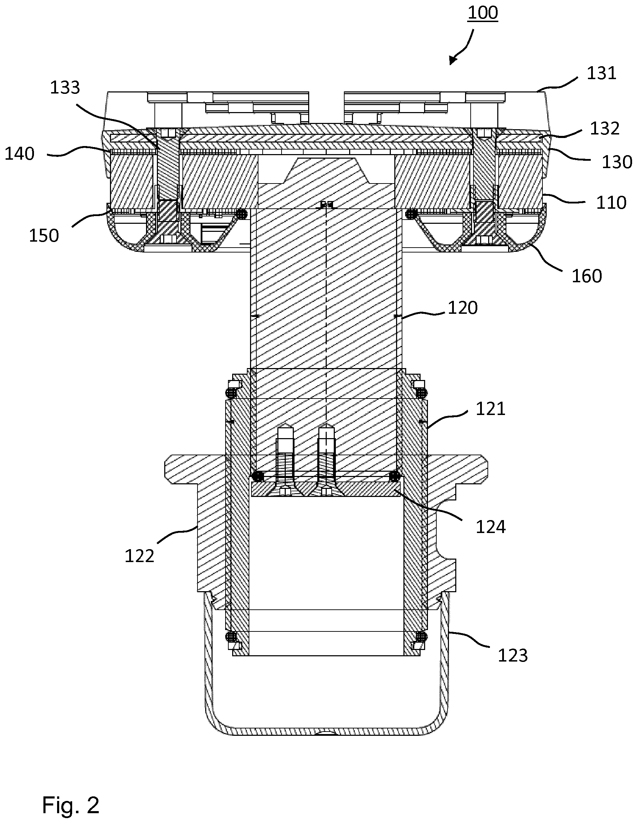

In Figur 2 ist beispielhaft ein Tragteller 100 dargestellt. Der in Figur 2 in einem Schnitt gezeigte Tragteller 100 besitzt eine tellerförmige Tragstruktur 110, die als Aufnahmeteller bezeichnet wird. An dessen Unterseite ist mittig ein Gewindebolzen 120 (z.B. M42x3) befestigt. Zur teleskopischen Höhenverstellung steckt dieser in einer Gewindebuchse 121, die wiederum ein Außengewinde (z.B. M56x3) aufweist, mit dem sie in einer Teleskopbuchse 122 mit entsprechendem Innengewinde eingeschraubt ist. An der Unterseite ist die Teleskopbuchse 122 mit einer Schutzkappe 123 versehen. Eine gegen die Unterseite des Gewindebolzens 120 geschraubte Scheibe 124 sichert den Gewindebolzen im unteren, radial erweiterten Bereich der Gewindebuchse 121, so dass der Gewindebolzen 120 nur innerhalb des zulässigen Verstellbereichs gegenüber der Gewindebuchse 121 in der Höhe heraus- oder hereingeschraubt, aber nicht entnommen werden kann. In Figur 2 ist die maximal nach ober herausgeschraubte Stellung des Gewindebolzens 120 in der Gewindebuchse 121 dargestellt.

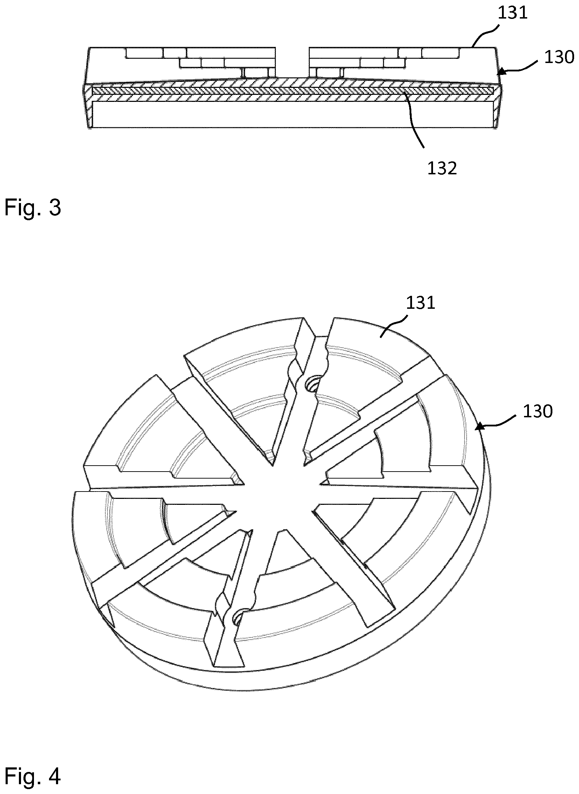

Auf der Oberseite des Aufnahmetellers 110 ist eine Elastomerauflage 130 angeordnet, die in den Figuren 3 und 4 näher dargestellt ist. Die Elastomerauflage 130 umgreift den Aufnahmetellers 110 randseitig und ist von der Oberseite her mittels zweier Senkkopfschrauben 133 mit dem Aufnahmeteller 110 verschraubt. An ihrer Oberseite besitzt die Elastomerauflage 130 eine rutschhemmende Profilierung in Form segmentierter, nach außen hin höher werdender Stufenringe 131, deren Anordnung in Figur 4 deutlicher zu erkennen sind.

Die Elastomerauflage besteht im Ausführungsbeispiel, ohne dass die Erfindung hierauf beschränkt wäre, aus Acryl-Nitril-Butadien-Kautschuk (NBR), welcher auch unter dem Handelsnamen Perbunan bekannt ist. Dieser Synthesekautschuk ist hervorragend beständig gegen Einwirkung von Kraftstoffen und Ölen, insbesondere Hydraulikölen, Schmierfetten, sowie sonstigen aliphatischen Kohlenwasserstoffen, Säuren und Laugen. Gute physikalische Werte wie z.B. hohe Abrieb- und Standfestigkeit und eine günstige Temperaturbeständigkeit von - 25°C bis+100°C machen den Werkstoff ideal geeignet für die Anwendung in Automobilwerkstätten, und hier insbesondere für ein Auflagerelement zur Aufnahme schwerer Kraftfahrzeuge. Weitere Materialien, die für den genannten Einsatz in Betracht kommen sind z.B. HNBR (hydrierter NBR) oder Viton (Fluorkautschuk).

Der Tragteller 100 umfasst eine erste Leiterplatte 140, welche zwischen Elastomerauflage 130 und Aufnahmeteller 110 angeordnet ist, und eine zweite, an der Unterseite des Aufnahmetellers 110 angebrachte Leiterplatte 150. Eine transparente Abdeckung 160 schützt die untere Leiterplatte 150 und deren Bauteile gegen mechanische Einflüsse und Schmutz. Die Leiterplatten 140 und 150 sind über einen durch ein Langloch in der Tragstruktur 110 geführten Leiterplattenverbinder bzw. Steckverbinder miteinander signaltechnisch verbunden. Die Leiterplatte 140 besteht aus einem üblichen Leiterplattenmaterial FR4, einem Verbundwerkstoff aus Epoxidharz und Glasfasergewebe. Durch die große Auflagefläche und das verwendete Leiterplattenmaterial kann die Auflagekraft problemlos über die Leiterplatte 140 übertragen werden.

Die Leiterplatte 140 umfasst eine Sensoranordnung zur Messung einer Drucckraftverteilung. Die zweite Leiterplatte 150 enthält einerseits eine Auswerteelektronik und Stromversorgung für die auf der oberen Leiterplatte 140 befindliche Sensoranordnung, anderseits eine Anzeige in Form mehrerer zweifarbiger Leuchtdioden 151. Das zugrundeliegende Messprinzip beruht darauf, dass die Elastomerauflage 130 durch eine Auflast mehr oder weniger verformt wird. Diese Verformung wird über die Spulen 141 induktiv gemessen. Die Sensoranordnung ist daher dazu ausgebildet, die Verformung der Elastomerauflage 130 zu messen. Dies kann kapazitiv oder, wie im vorliegenden Ausführungsbeispiel, induktiv erfolgen.

Die gezeigte Elastomerauflage hat eine Shore-Härte (Shore A) von 70 ± 5 Shore. Bei einer Auflast von 1250 kg und einem Durchmesser des Tragtellers von 120 mm ergibt sich dabei eine Abstandsänderung im Bereich von 5%. Diese bietet eine gute Basis für eine induktive Abstandsmessung mit einer ausreichenden Messwertänderung auch bei kleineren Lasten.

Zur induktiven Abstandsmessung sind auf der oberen Leiterplatte 140 in kreisförmiger Anordnung insgesamt acht gedruckte Spulen 141 aufgebracht. Die Spulen dienen als Drucksensoren, die eine auf dem Tragteller lastende Gewichtskraft und Kraftverteilung messen. Im Inneren der Elastomerauflage 130 ist ein metallisches Zwischenblech 132 eingebettet. Das Zwischenblech 132 sorgt einerseits für eine flächige Druckverteilung auf den Aufnahmeteller 110. Außerdem dient das Zwischenblech 132 als Bezugspunkt für eine Abstandsmessung. Das zwischen der Tragstruktur 110 des Tragtellers und dem Zwischenblech 132 befindliche Material der Elastomerauflage wird abhängig von einer auflastenden Kraft verformt. Zur Messung wird die Abstandsänderung zwischen der Tragstruktur 110 und dem Zwischenblech 132 unter Krafteinwirkung, also die Dickenänderung der dazwischen befindlichen Elastomerschicht, gemessen. Die Änderung des Abstands wirkt sich auf die Induktivität der Spulen 141 aus, die wiederum elektrisch ausgewertet werden kann. Messung und Auswertung erfolgt über eine auf der unteren Leiterplatte untergebrachte Auswerteelektronik. Auf der unteren Leiterplatte 150 ist außerdem eine Sensoreinrichtung zur Beschleunigungsmessung untergebracht.

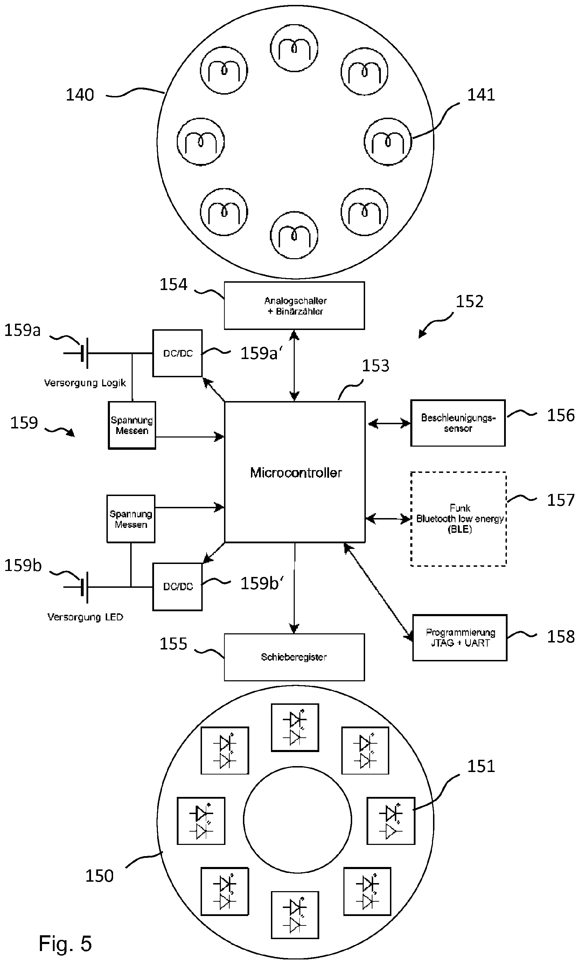

In Figur 5 ist ein Blockschaltbild der auf den beiden Leiterplatten untergebrachten Schaltungsbestandteile dargestellt.

Auf der oberen Leiterplatte 140 sind in kreisförmiger Anordnung insgesamt acht gedruckte Spulen 141 aufgebracht. Diese sind über die durch den Tragteller 110 verlaufende Steckverbindung mit der auf der unteren Leiterplatte 150 befindlichen Auswerteelektronik 152 verbunden, die in Form integrierter Schaltkreise realisiert werden kann. Außerdem befinden sich auf der unteren Leiterplatte 150 in ebenfalls kreisförmiger Anordnung insgesamt acht zweifarbige Leuchtdioden 151. Jede der Leuchtdioden 151 ist einer der gedruckten Spulen 141 zugeordnet und dient als Anzeige der mittels dieser Spule ermittelten Auflagekraft. Die Messung und Anzeige der Druckkraft erfolgt somit über acht Sektoren, die der Segmentierung der Stufenringe 131 der Elastomerauflage 130 entsprechen.

Die Auswerteelektronik 152 umfasst einen Mikrocontroller 153, einen integrierten Steuerbaustein mit Analogschalter und Binärzähler, einen integrierten Steuerbaustein mit Schieberegistern, einen Beschleunigungssensor 156, ein Sender/Empfängermodul 157 zur drahtlosen Datenübertragung beispielsweise nach dem Bluetooth- oder Zigbee-Standard, sowie eine Programmierschnittstelle 158 nach dem JTAG und/oder UART Standard.

Die Ansteuerung bzw. Messung der Induktivität der Spulen 141 erfolgt über den Analogschalterbaustein 154, der auch Binärzähler aufweist, mit deren Hilfe durch Auszählen über definierte Zeitintervalle eine Signalfrequenz gemessen werden kann. Die Ansteuerung der LEDs 151 erfolgt gemultiplext, d.h. in zeitlichem Versatz über die als Port-Extender dienenden Schieberegister 155.

Die Stromversorgung 159 erfolgt über zwei Batterien 159a, 159b, z.B. 3 V Lithium-Knopfzellen, von denen die eine 159a zur Versorgung der Auswerteelektronik 152, die andere 159b zur Versorgung der LEDs 151 dient, da letztere im Betrieb den höchsten Stromverbrauch haben. Jede der Batterien besitzt einen geregelten DC/DC-Wandler 159a`, 159b`, um die Spannung auf einen niedrigeren Wert von z.B. 2 V herunter zu regeln. Die Regelung der DC/DC-Wandler 159a`, 159b` übernimmt ebenfalls der Mikrocontroller 153, welcher die jeweilige Batteriespannung misst und den zugehörigen DC/DC-Wandler 159a', 159b` entsprechend ansteuert.

Zur Signalerfassung werden die gedruckten Spulen 141 verwendet, die abhängig vom Abstand zum Zwischenblech 132 in der Auflage 130 ihre Induktivität ändern. Um die Induktivitätsänderung zu messen wird ein modifizierter Colpitts-Oszillator verwendet. Um den Schaltungsaufwand bzw. die benötigten Bauteile und Signalleitungen gering zu halten, werden je vier Spulen über den Analogschalter 154 auf den Oszillator geschaltet. Dadurch kann auch vermieden werden, dass sich die Spulen 141 gegenseitig beeinflussen. Um das Sensorsignal möglichst einfach mit dem Microcontroller 153 auswerten zu können, wird ein Zählerbaustein 154 eingesetzt, der die Oszillatorschwingungen misst. Das Ausgangssignal des Zählerbausteins 154 kann direkt mit einem Input Capture des Microcontrollers 153 ausgewertet werden. Um eine Bewegung zu erkennen und damit die Kraftmessung zu starten, wird der Beschleunigungssensor 156 eingesetzt. Schaltet der Microcontrollers 153 nach Inaktivität über eine vorgegebene Zeitspanne in einen Standby-Modus, so wird weckt der Beschleunigungssensor 156 den Microcontrollers 153 bei Erkennen einer Bewegung des Tragtellers wieder auf, um eine Messung zu starten. Der Beschleunigungssensor 156 kann außerdem dazu verwendet werden die Lage zu erkennen und somit z.B. auch erkennen ob der Tragteller 110 waagrecht eingebaut ist.

Zur Anzeige wird je Sektor eine der 2-farbigen LEDs 151 verwendet. Um Pins am Microcontroller 153 zu sparen werden zur Ansteuerung Schieberegister 155 als Port-Extender verwendet. Da die Spannungsversorgung 159 nicht viel Strom treiben kann, sollte immer nur eine der LEDs 151 aktiv sein und somit die Ansteuerung gemultiplext erfolgen. Dies verlängert die Lebensdauer der Batterie 159b. Die Intensität der LEDs kann durch eine zusätzliche PWM-Ansteuerung reduziert werden.

Über die Funkschnittstelle 157 können die pro Sektor ermittelten, auflastabhängigen Messwerte an einen Zentralcomputer oder über ein Netzwerk zu entfernten Servern übertragen werden, wo die Messwerte weiter ausgewertet und gespeichert werden.

## Patentansprüche

1. Tragteller für eine Fahrzeughebebühne mit einer tellerförmigen Tragstruktur (110) zur Aufnahme eines anzuhebenden Fahrzeugs an einem fahrzeugseitigen Aufnahmepunkt, mit einem an der Unterseite der Tragstruktur angeordneten Befestigungselement (120) zur lösbaren Befestigung des Tragtellers (3b, 4b, 5b, 6b, 100) an einem Tragarm (3, 4, 5, 6) der Fahrzeughebebühne und mit einer Sensoranordnung (140) zum Erfassen einer auf den Tragteller (3b, 4b, 5b, 6b, 100) wirkenden Gewichtskraft,
der Tragteller (3b, 4b, 5b, 6b, 100) eine elastische Auflage (130) umfasst und die Sensoranordnung (140) ausgebildet sind, eine Verformung der elastischen Auflage (130) unter Krafteinwirkung zu detektieren
**dadurch gekennzeichnet, dass**
die elastische Auflage (130) zumindest teilweise zwischen einem metallischen Element (132), insbesondere einem scheibenförmigen Element und der Tragstruktur (110) angeordnet ist, und die Sensoranordnung (140) ausgebildet sind, eine Abstandsänderung zwischen dem Element und der Tragstruktur unter Krafteinwirkung zu detektieren.

2. Tragteller nach Anspruch 1, bei dem das metallische Element (132) in die elastische Auflage (130) eingebettet ist.

3. Tragteller nach Anspruch 1, bei dem die Sensoranordnung (140) zwischen der elastischen Auflage (130) und der Tragstruktur (110) angeordnet ist.

4. Tragteller nach Anspruch 1 oder 2, bei dem die Sensoranordnung (140) mindestens eine Spule (141) umfasst und bei dem eine Messanordnung (152) vorgesehen ist, die zur Messung einer Änderung der Induktivität der Spule aufgrund einer Abstandsänderung zwischen der Spule (141) und dem metallischen Element (132) ausgebildet ist.

5. Tragteller nach Anspruch 4, bei dem die mindestens eine Spule (141) auf eine zwischen elastischer Auflage (130) und Tragstruktur (110) angeordneten Leiterplatte (140) aufgedruckt ist.

6. Tragteller nach Anspruch 4 oder 5, bei dem die Sensoranordnung (140) mehrere in Umfangsrichtung versetzt angeordnete Spulen (141), insbesondere auf die zwischen elastischer Auflage (130) und Tragstruktur (110) angeordnete Leiterplatte (140) aufgedruckte Spulen (141) umfasst und die Messanordnung (152) zur Ermittlung einer Kraftverteilung über die Auflage des Tragtellers (3b, 4b, 5b, 6b, 100) ausgebildet ist.

7. Tragteller nach einem der Ansprüche 4 bis 6, bei dem die Auflage (130) durch radial verlaufende Vertiefungen in gleichartige Sektoren unterteilt ist und jedem Sektor eine der Spulen (141) zugeordnet ist.

8. Tragteller nach einem der vorangehenden Ansprüche, bei dem die Sensoranordnung auf einer ersten, zwischen Auflage (130) und Tragstruktur (110) angeordneten Leiterplatte (140) untergebracht ist und bei dem eine Auswerteeinheit (153) zur Ansteuerung der Sensoranordnung (140) und/oder Auswertung von der Sensoranordnung (140) gelieferter Messsignale auf einer zweiten, an einer Unterseite der Tragstruktur (110) angeordneten Leiterplatte (150) untergebracht ist.

9. Tragteller nach Anspruch 8, bei dem die erste und die zweite Leiterplatte (140, 150) über eine durch einen Durchbruch in der Tragstruktur geführte Steckverbindung signaltechnisch verbunden sind.

10. Tragteller nach einem der vorangehenden Ansprüche, bei dem die Sensoranordnung (140) und zugehörige Auswerteeinheit (153) von einer batteriebetriebenen Stromquelle (159) versorgt werden und die Auswerteeinheit (153) einen stromsparenden Standby-Betriebsmodus aufweist, in welchen die Auswerteeinheit (153) bei Inaktivität über einen vorgegebenen Standby-Zeitraum umschaltet, und bei dem mindestens ein Beschleunigungssensor (156) zum Erfassen einer Beschleunigung des Tragtellers (3b, 4b, 5b, 6b, 100) vorgesehen ist, der mit der Auswerteeinheit (153) signaltechnisch verbunden ist, um diese bei Auftreten einer Beschleunigung aus dem Standby-Betriebsmodus aufzuwecken.

11. Tragteller nach einem der vorangehenden Ansprüche, mit einer Sendeeinheit (157) zur drahtlosen Übertragung von der Sensoranordnung (140) gemessener oder davon abgeleiteter Signale an eine Zentraleinheit.

12. Hebebühne für Fahrzeuge mit mittels eines Hubmechanismus (1, 2) höhenverstellbaren Tragarmen (3, 4, 5, 6) zum Anheben des Fahrzeugs und mit an einem freien Ende der Tragarme (3, 4, 5, 6) angeordneten Tragtellern (3a, 4a, 5a, 6a; 10) zum Tragen des zu hebenden Fahrzeugs, wobei die Tragteller (3a, 4a, 5a, 6a; 10) Mittel (14, 20) zum Erfassen einer auf den Tragteller (10) wirkenden Gewichtskraft umfassen,
**dadurch gekennzeichnet, dass**
die Tragteller (3b, 4b, 5b, 6b, 100) als Tragteller nach einem der vorangehenden Ansprüche ausgebildet sind.

## Claims

1. Carrier plate for a vehicle raising platform having a plate-shaped carrier structure (110) for receiving a vehicle to be raised at a mounting point on the vehicle, having a fastening point (120) arranged on the bottom side of the carrier structure for the releasable fastening of the carrier plate (3b, 4b, 5b, 6b 100) to a carrier arm (3, 4, 5, 6) of the vehicle raising platform and having a sensor arrangement (140) for detecting a weight force acting on the carrier plate (3b, 4b, 5b, 6b 100),
the carrier plate (3b, 4b, 5b, 6b 100) comprises an elastic layer (130) and the sensor arrangement (140) is designed to detect a deformation of the elastic layer (130) when a force acts on it
**characterised in that**
the elastic layer (130) is arranged at least partially between a metallic element (132), particularly a disc-shaped element, and the carrier structure (110), and the sensor arrangement (140) is designed to detect a change in the spacing between the element and the carrier structure when a force acts on it.

2. Carrier plate according to claim 1, in the case of which the metallic element (132) is embedded in the elastic layer (130).

3. Carrier plate according to claim 1, in the case of which the sensor arrangement (140) is arranged between the elastic layer (130) and the carrier structure (110).

4. Carrier plate according to claim 1 or 2, in the case of which the sensor arrangement (140) comprises at least one coil (141) and in which a measuring arrangement (152) is provided, which is designed to measure a change in the inductance of the coil caused by a change in spacing between the coil (141) and the metallic element (132).

5. Carrier plate according to claim 4, in the case of which the at least one coil (141) is printed on a circuit board (140) arranged between elastic layer (130) and carrier structure (110).

6. Carrier plate according to claim 4 or 5, in the case of which the sensor arrangement (140) comprises several coils (141) arranged offset in circumferential direction, in particular coils (141) printed on the circuit board (140) arranged between elastic layer (130) and carrier structure (110), and the measuring arrangement (152) is designed to determine a distribution of force across the layer of the carrier plate (3b, 4b, 5b, 6b 100).

7. Carrier plate according to any of claims 4 to 6, in the case of which the layer (130) is divided into identical sectors by radially extending indentations, and one of the coils (141) is assigned to each sector.

8. Carrier plate according to any of the preceding claims, in the case of which the sensor arrangement is accommodated on a first circuit board (140) arranged between layer (130) and carrier structure (110) and in the case of which an evaluating unit (153) for controlling the sensor arrangement (140) and/or evaluating measuring signals delivered from the sensor arrangement (140) is accommodated on a second circuit board (150) arranged on a bottom side of the support structure (110).

9. Carrier plate according to claim 8, in the case of which the first and the second circuit board (140, 150) are signal-connected by means of a plug-in-connection guided through an opening in the carrier structure.

10. Carrier plate according to any of the preceding claims, in the case of which the sensor arrangement (140) and associated evaluating unit (153) are supplied by a battery-driven electricity source (159) and the evaluating unit (153) has an electricity-saving standby-operating mode in which, in the case of inactivity for a predetermined standby-time period, the evaluating unit (153) switches over, and in the case of which at least one deceleration sensor (156) is provided for detecting a deceleration of the carrier plate (3b, 4b, 5b, 6b 100), which is signal-connected with the evaluating unit (153) in order to wake it from the standby-operating mode in the case that an acceleration occurs.

11. Carrier plate according to any of the preceding claims, having a transmitting unit (157) for the wireless transmission of measured signals from the sensor arrangement (140) or signals derived therefrom to a central unit.

12. Vehicle raising platform having carrier arms (3, 4, 5, 6), which are height-adjustable by means of a lifting mechanism (1, 2), for raising the vehicle, and having carrier plates (3a, 4a, 5a, 6a; 10) arranged on a free end of the carrier arms (3, 4, 5, 6) for carrying the vehicle to be raised, wherein the carrier plates (3a, 4a, 5a, 6a; 10) comprise means (14, 20) for detecting a weight force acting on the carrier plate (10),
**characterised in that**
the carrier plates (3b, 4b, 5b, 6b, 100) are configured as carrier plates according to any of the preceding claims.

## Revendications

1. Plateau porteur pour un pont élévateur pour véhicules avec une structure porteuse (110) en forme de plateau pour la réception d'un véhicule à lever en un point de réception côté véhicule, avec un élément de fixation (120) agencé au niveau du côté inférieur de la structure porteuse pour la fixation amovible du plateau porteur (3b, 4b, 5b, 6b, 100) à un bras porteur (3, 4, 5, 6) du pont élévateur pour véhicules et avec un agencement de capteur (140) pour la détection d'un poids agissant sur le plateau porteur (3b, 4b, 5b, 6b, 100),
le plateau porteur (3b, 4b, 5b, 6b, 100) présente un appui élastique (130) et l'agencement de capteur (140) est réalisé afin de détecter une déformation de l'appui élastique (130) sous l'action de la force,
**caractérisé en ce que**
l'appui élastique (130) est agencé au moins partiellement entre un élément métallique (132), en particulier un élément en forme de disque et la structure porteuse (110), et l'agencement de capteur (140) est réalisé afin de détecter une modification de distance entre l'élément et la structure porteuse sous l'action de la force.

2. Plateau porteur selon la revendication 1, pour lequel l' élément métallique (132) est intégré dans l'appui élastique (130).

3. Plateau porteur selon la revendication 1, pour lequel l'agencement de capteur (140) est agencé entre l'appui élastique (130) et la structure porteuse (110).

4. Plateau porteur selon la revendication 1 ou 2, pour lequel l'agencement de capteur (140) présente au moins une bobine (141) et pour lequel un agencement de mesure (152) est prévu, lequel est réalisé pour la mesure d'une modification de l'inductance de la bobine en raison d'une modification de distance entre la bobine (141) et l'élément métallique (132).

5. Plateau porteur selon la revendication 4, pour lequel l'au moins une bobine (141) est appliquée sur un circuit imprimé (140) agencé entre l'appui élastique (130) et la structure porteuse (110).

6. Plateau porteur selon la revendication 4 ou 5, pour lequel l'agencement de capteur (140) présente plusieurs bobines (141) agencées en déport dans le sens périphérique, en particulier des bobines (141) appliquées sur le circuit imprimé (140) agencé entre l'appui élastique (130) et la structure porteuse (110) et l'agencement de mesure (152) est réalisé pour la détermination d'une distribution de force sur l'appui du plateau porteur (3b, 4b, 5b, 6, 100).

7. Plateau porteur selon l'une quelconque des revendications 4 à 6, pour lequel l'appui (130) est divisé par des cavités s'étendant radialement en secteurs similaires et une des bobines (141) est associée à chaque secteur.

8. Plateau porteur selon l'une quelconque des revendications précédentes, pour lequel l'agencement de capteur est logé sur un premier circuit imprimé (140) agencé entre l'appui (130) et la structure porteuse (110) et pour lequel une unité d'évaluation (153) est logée pour la commande de l'agencement de capteur (140) et/ou l'évaluation de signaux de mesure fournis par l'agencement de capteur (140) sur un second circuit imprimé (150) agencé au niveau d'un côté inférieur de la structure porteuse (110).

9. Plateau porteur selon la revendication 8, pour lequel le premier et le second circuit imprimé (140, 150) sont reliés en signal par le biais d'une liaison enfichée guidée à travers une ouverture dans la structure porteuse.

10. Plateau porteur selon l'une quelconque des revendications précédentes, pour lequel l'agencement de capteur (140) et l'unité d'évaluation (153) afférente sont alimentées par une source de courant (159) fonctionnant sur batterie et l'unité d'évaluation (153) présente un mode de fonctionnement de veille à faible consommation de courant, dans lequel l'unité d'évaluation (153) commute en cas d'inactivité pendant une période de veille prédéfinie, et pour lequel au moins un capteur d'accélération (156) est prévu pour la détection d'une accélération du plateau porteur (3b, 4b, 5b, 6b, 100) qui est relié en signal à l'unité d'évaluation (153) afin d'éveiller celle-ci en cas de survenue d'une accélération depuis le mode de fonctionnement de veille.

11. Plateau porteur selon l'une quelconque des revendications précédentes, avec une unité d'émission (157) pour la transmission sans fil de signaux mesurés par l'agencement de capteur (140) ou dérivés de celui-ci à une unité centrale.

12. Pont élévateur pour des véhicules avec des bras porteurs (3, 4, 5, 6) réglables en hauteur au moyen d'un mécanisme de levage (1, 2) pour le levage du véhicule et avec des plateaux porteurs (3a, 4a, 5a, 6a ; 10) agencés à une extrémité libre des bras porteurs (3, 4, 5, 6) pour porter le véhicule à lever, dans lequel les plateaux porteurs (3a, 4a, 5a, 6a ; 10) présentent des moyens (14, 20) pour la détection d'un poids agissant sur le plateau porteur (10),
**caractérisé en ce que**
les plateaux porteurs (3b, 4b, 5b, 6b, 100) sont réalisés comme plateaux porteurs selon l'une quelconque des revendications précédentes.
